# EUROPEAN PATENT SPECIFICATION

(11) **EP 3 792 470 B1**
(45) Date of publication and mention of the grant of the patent: **26.01.2022**
(21) Application number: 19382788.8
(22) Date of filing: 12.09.2019
(51) Int. Cl.: F02C 7/06, B64D 41/00, F16H 57/04, F16K 3/06, F16K 31/30, F16N 19/00

(54) **OVERFILL VALVE WITH A FLOATING VALVE**
ÜBERFÜLLVENTIL MIT EINEM SCHWIMMERVENTIL
SOUPAPE DE TROP-PLEIN AYANT UNE SOUPAPE À FLOTTEUR

(43) Date of publication of application: 17.03.2021
(73) Proprietor: Airbus Operations, S.L., 28906 Getafe (ES)
(72) Inventor: FERNÁNDEZ LÓPEZ, Pio, 28905 Getafe (ES); CHIABRANDO, Marcos Javier, 28906 Getafe (ES)

(56) References cited:
- CH-A- 494 360
- GB-A- 275 518
- JP-B1- S4 923 925
- SU-A1- 1 117 422
- US-A1- 2018 143 060

## Description

The invention relates to overfill valves. The invention also relates to a gearbox and an aircraft comprising such valve.

SU1117422 A1 discloses an overfill valve according to the preamble of claim 1.

Particularly, the object of the present invention is to provide an overfill valve for an auxiliary power unit (APU) oil sump integrated in the gearbox of an APU in an aircraft.

An APU in an aircraft provides electricity in addition to the power produced by the main engine. Generally, the APU uses gas turbine engines, like those of the main engine, although smaller. An APU turbine is therefore limited in efficiency and creates gaseous emissions similar to the main engine.

The APU lubrication system provides pressurized oil to the APU gearbox and the electrical generator for lubrication and heat removal. The lubrication system comprises a mechanically driven lubricating module or oil sump integrated in the APU gearbox. The APU gearbox reduces the turbine shaft revolutions per minute to a speed suitable to operate the gearbox mounted accessories. Accessories include the mechanically driven lubricating module, a fuel control unit, an electric starter and the APU electrical generator.

The oil level in the oil sump can be conventionally checked using a sight glass on the oil filler. However, oil overfill events occur during maintenance. Improvement of the APU lubrication system to avoid overfill in the oil sump of the APU gearbox would thus be beneficial. Besides, because the oil sump is part of the APU gearbox, with many moving parts, placing conventional draining devices may be challenging.

The present invention provides a valve that is easy to mount.

The invention proposes a valve that may be mounted as retrofit on existing oil sumps.

The invention proposes a valve that is particularly economical.

The invention also proposes a valve that require no maintenance.

The invention proposes an overfill valve comprising the features of claim 1.

The overfill valve may be for a sump with an overfill sump port. The intake may be adapted to be mounted on the sump port. The intake may be adapted to receive liquid from the sump port, in particular the intake may be adapted to receive an excess of liquid from the sump port.

The overfill valve may comprise a housing comprising the intake, the drain, and the chamber formed within the housing.

The overfill valve is adapted to let a liquid received at the intake flow into the chamber through the intake opening. Similarly the overfill valve is adapted to let a liquid flow from the chamber through the intake opening to the drain.

The chamber may comprise only two openings: the intake opening and the drain opening. When one of the intake opening and the drain opening is closed, no liquid may circulate in the chamber.

The intake opening and the drain opening may be in a bottom portion of the chamber when the valve according to the invention is mounted on a sump. The intake opening and/or the drain opening may be arranged in a bottom portion of the chamber, at a non-null distance from the bottom surface of the chamber. This allows a simple manufacturing of the housing. This also ensures that when there is liquid below a predetermined threshold in the chamber, the intake opening and/or drain opening which is at a non-null distance from the bottom surface of the chamber will remain closed by the floating valve.

However, in other embodiments, the intake opening and/or the drain opening may be in a different portion than in the bottom portion of the chamber.

The floating valve comprises a first face adapted to be displaced in front of the intake opening. In particular this first face of the floating valve may close the intake opening by being placed directly in front of the intake opening, and may open the intake opening when it is displaced by a floating force applied on the floating valve.

The same, or another floating valve may comprise a second face, adapted to be displaced in front of the drain opening. Similarly, this second face of the floating valve may close the drain opening by being placed directly in front of the drain opening, and may open the drain opening when it is displaced by a floating force applied on the floating valve.

The floating valve is adapted to float on a liquid received from the sump port. In particular the floating valve is designed to float on an oil of the sump port. More specifically, the floating valve is adapted to float on an oil of a gearbox of an aircraft engine.

The average density of the floating valve is smaller than that of the predetermined liquid to be received at the intake. The shape of the floating valve may also be adapted to optimize the floatability of the floating valve on said liquid.

The floating valve may be substantially in one piece. For example the floating valve may be in one piece of a density lower than that of the liquid.

In other embodiments, the floating valve may comprise multiple parts. The floating may valve for example comprise a lever arm and a float, with a proximal end of the lever arm hinged at the hinging axis, and the float mounted at a distal end of the lever arm.

A proximal end of the floating valve is hinged along the hinging axis. For example the proximal end of the floating valve may be attached to one or more pivot(s) along the hinging axis. The shape and size of the floating valve are adapted so that a distal end of the floating valve is adapted to float on the liquid when the liquid is introduced in the chamber through the intake opening. In a first position, or closed position, the distal end of the floating valve is thus in a bottom portion of the chamber when there is no liquid in the chamber.

In a valve according to the invention, the floating valve may be the only moving part, such that it requires little or no maintenance and that an overfill valve according to the invention has a good life-expectancy.

A valve according to the invention may further be characterized in that:
- when the chamber comprises liquid below a predetermined level, the floating valve is in a position adapted to close at least one of the intake opening and the drain opening,
- when the chamber comprises liquid above a predetermined level, the floating valve is in a position adapted to allow a liquid to flow in the chamber from the intake opening to the drain opening.

In the first position the floating valve closes at least one of the intake opening and the drain opening such that there may be no flow of liquid through the closed opening. Also, because the floating valve closes one of the openings, no liquid may substantially flow through the chamber.

If an amount of liquid above a predetermined amount is received from the intake in the chamber through the intake opening, the floating valve floats upward and thereby at least partially opens each of the intake opening and drain opening.

The floating valve may be long enough to extend from the intake opening to the drain opening.

The floating valve may be long enough to extend from the intake opening to the drain opening.

Alternatively, an overfill valve according to the invention may comprise a plurality of floating valve, each closing one of the intake opening and drain opening.

This flow of liquid from the intake to the chamber may be authorized upon the liquid reaching a minimum threshold level in the intake portion of the housing.

The valve may further comprise a housing comprising:
- the intake,
- the drain,
- the chamber formed within the housing,
- an external shoulder.

The shoulder may be adapted to lean on an external surface of the sump and thus limit the movement of the intake in the sump port.

The housing and in particular the intake are adapted to be mounted to a sump port. At least part of an external surface of the housing may be threaded.

In particular a portion of the housing situated on the intake side, is cylindrical and threaded on its outer surface. This allows to screw the valve in a correspondingly threaded sump port. The overfill valve may thus be mounted to an oil overfill port of a gearbox or of an engine.

The housing of the chamber may be directly inserted in a port of an oil sump. Alternatively, the housing may comprise a dedicated connection portion or intake which extends beyond an extremity of the chamber, said connection portion being able to allow a flow of liquid from outside the housing to the intake opening. The connection portion may have a different diameter, in particular a smaller diameter, than the chamber. This connection portion would thus allow to easily mount a valve of the invention on any type and size of available port on an oil sump such as for example an oil sump of an APU gearbox.

The drain may be adapted to be connected to a drain collector.

The drain collector may be a pipe or another device or housing adapted to collect liquid from the drain of a valve according to the invention towards a dedicated reservoir or evacuation.

The floating valve is adapted to slide along its hinging axis.

The floating valve is adapted to slide along its hinging axis upon a gas pressure difference between the intake opening and the drain opening. In particular upon a pressure difference between the intake opening and the drain opening, a wind will appear in the chamber between the intake opening and the drain opening. The floating valve and its hinging axis are adapted to allow the floating valve to slide along its hinging axis under the effect of such wind. In particular, the floating valve may slide along its hinging axis when the pressure difference between the intake opening and the drain opening is higher than a predetermined threshold value.

More particularly, the floating valve may be adapted to slide along its hinging axis towards the drain opening upon the occurring of a gas pressure at the intake opening higher by a predetermined value than the gas pressure at the drain opening. The floating valve may thus be displaced against the drain opening and may close it with its extremity situated on that side of the chamber. The floating valve slides so as to close the drain opening as long as the liquid level is below its threshold.

Similarly, the floating valve may be adapted to slide along its hinging axis towards the intake opening upon the occurring of a gas pressure at the drain opening higher by a predetermined value than the gas pressure at the intake opening. The floating valve may thus be displaced against the intake opening and may close it with its extremity situated on that side of the chamber. The floating valve slides so as to close the intake opening as long as the liquid level is below its threshold.

This allows to maintain the pressure in a gear box equipped with such valve. Indeed, whether the pressure inside the gearbox is higher or lower than the pressure outside the gearbox, the floating valve is adapted to airtightly close the sump port.

The floating valve may comprise at least one seal at one or either of its extremities so as to ensure a better closing of the intake opening or drain opening.

In a valve according to the invention:
- the floating valve being in the first position, and
- a gas pressure at the intake opening being higher by a predetermined value than a gas pressure at the drain opening,
- the floating valve is adapted to slide along its hinging axis towards the drain opening.

The floating valve may thus close the drain opening.

Similarly, when the floating valve is in the first position, and a gas pressure at the drain opening is higher by a predetermined value than the gas pressure at the intake opening, the floating valve is adapted to slide along its hinging axis towards the intake opening. The floating valve may thus close the intake opening.

The floating valve thus allows to keep constant the gas pressure in the sump, and more generally in a gearbox. Indeed, if the pressure outside the gearbox is higher than the pressure within the gearbox, the floating valve will close the intake opening such that no fluid, in particular no gas may flow through the valve. Similarly, if the pressure outside the gearbox is smaller than the pressure within the gearbox, the floating valve will close the drain opening such that no fluid, in particular no gas may flow through the valve.

The hinging axis is situated on a lateral side of the chamber, parallel to a flow direction between the intake opening and the drain opening.

The hinging axis may be situated on lateral side in the sense that it is not on the side of the chamber foreseen to be a bottom of the chamber where fluid will flow in normal conditions of functioning, nor on the side of the chamber foreseen to be a roof of the chamber where no fluid will flow in normal conditions. Normal conditions may in this sense be defined as conditions in which the valve is situated in a gravitation or acceleration field of constant orientation.

The chamber may be cylindrical. The chamber may be limited by a first end wall and an opposite second end wall. The intake opening forms a fluid connection through the first end wall. The drain opening forms a fluid connection through the second end wall.

The shape and size of the floating valve, and its hinging axis in the chamber, are adapted to close at least one of the intake opening and drain opening when the liquid level is below a predetermined threshold.

The overfill valve and/or its housing, may have a generally axisymmetrical outer surface.

The floating valve has an elliptical cross-section.

The elliptical cross section provides multiple benefits to the floating valve.

The floating valve may be fixed to its hinging axis along a vertex of its elliptical cross-section. This facilitates the rotation of the floating valve in the chamber, in particular in a cylindrical chamber. It facilitates the rotation of the floating valve as a liquid exerts of force on the floating valve, because the lowest point of the floating valve in the chamber, which will be submitted to the floating force, is also the portion of the floating valve furthest situated from the hinging axis (at the major axis length), such that the torque applied by the liquid to the floating valve is optimal.

The major axis of the floating valve is smaller than the diameter of the chamber, so as to allow the floating valve to hinge around its hinging axis.

The floating valve may have an elongated shape in a direction orthogonal to its elliptical cross-section.

The liquid may be an oil. The oil may be a lubricating oil, such as an oil of a gearbox or of engine.

A valve according to the invention may be adapted to be mounted on an oil sump.

The sump may be an oil sump of an aircraft gearbox. The gearbox may be the gearbox of an auxiliary power unit (APU).

The invention extends to a gearbox comprising at least one overfill valve according to the invention.

The invention extends to an engine comprising at least one overfill valve according to the invention. The engine may for example be an aircraft auxiliary power unit (APU).

The invention extends to an oil tank comprising at least one overfill valve according to the invention.

The invention also extends to an aircraft comprising at least one overfill valve according to the invention. In particular the invention extends to an aircraft comprising at least one gearbox according to the invention, and/or comprising at least one engine according to the invention, and/or comprising at least one oil tank according to the invention.

The invention extends to a method for retrofitting an existing device with an overfill valve according to the invention. The device may for example be a gearbox, an engine, an oil tank such as a gearbox oil tank or an engine oil tank for example. The invention particularly extend to a method in which:
- a plug is removed from a sump port,
- an overfill valve according to the invention is mounted in the sump port.

In such method the overfill valve is mounted in the sump port so as to place the intake opening and the drain opening towards a bottom portion of the sump port.

The invention also extends to other possible combinations of features described in the above description and in the following description relative to the figures.

Some specific exemplary embodiments and aspects of the invention are described in the following description in reference to the accompanying figures.
Figure 1 is a schematic representation of a longitudinal cross-section of an overfill valve embodiment according to the invention, in a first position.
Figure 2 is a schematic representation of a longitudinal cross-section of an overfill valve according to that of Figure 1, is a second position.
Figure 3 is a schematic representation of a transversal cross-section of an overfill valve according to that of Figures 1 and 2, in a first position.
Figure 4 is a schematic representation of a transversal cross-section of an overfill valve according to that of Figures 1-3, in a second position.
Figure 5 is a schematic representation of a partial perspective view of an overfill valve according to that of Figures 1-4.
Figure 6 is a schematic representation of a longitudinal cross-section of an overfill valve according to that of Figures 1-5.
Figure 7 is a schematic representation of a longitudinal cross-section of an overfill valve according to that of Figures 1-6.
Figure 8 is a schematic perspective and partially exploded representation of a gearbox according to the invention.
Figure 9 is a schematic representation of an aircraft according to the invention.

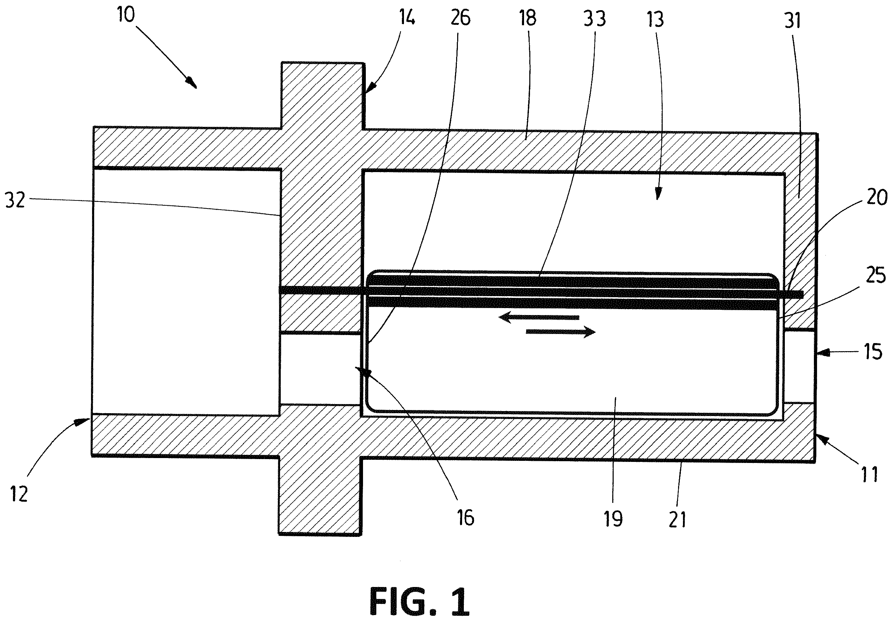

In figures 1-7, an embodiment of an overfill valve 10 according to the invention is shown. The overfill valve represented is an overfill valve for a gearbox oil sump. In this embodiment, the liquid is a lubrication oil.

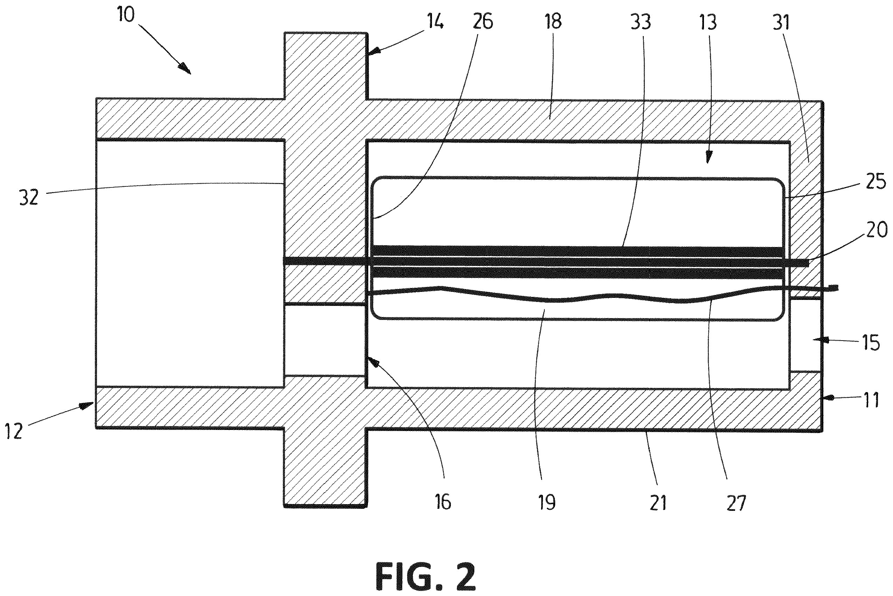

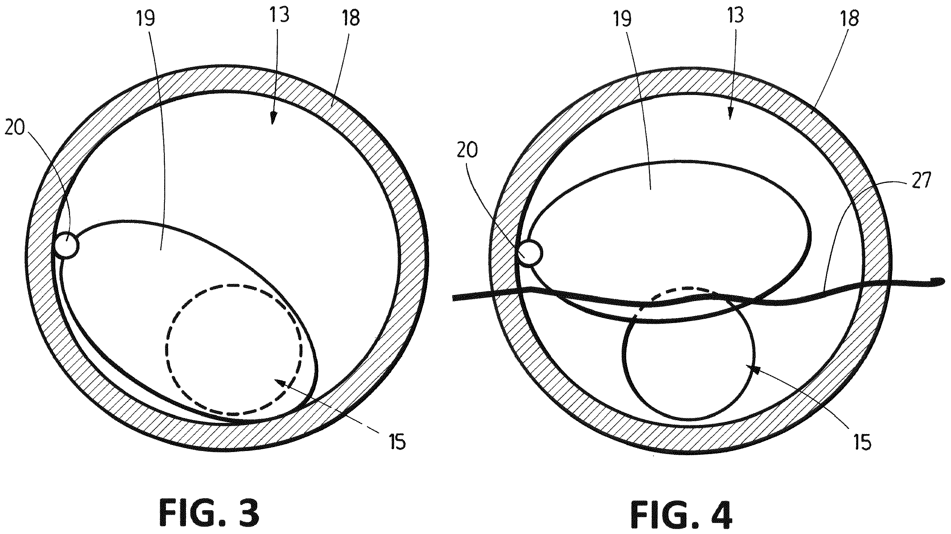

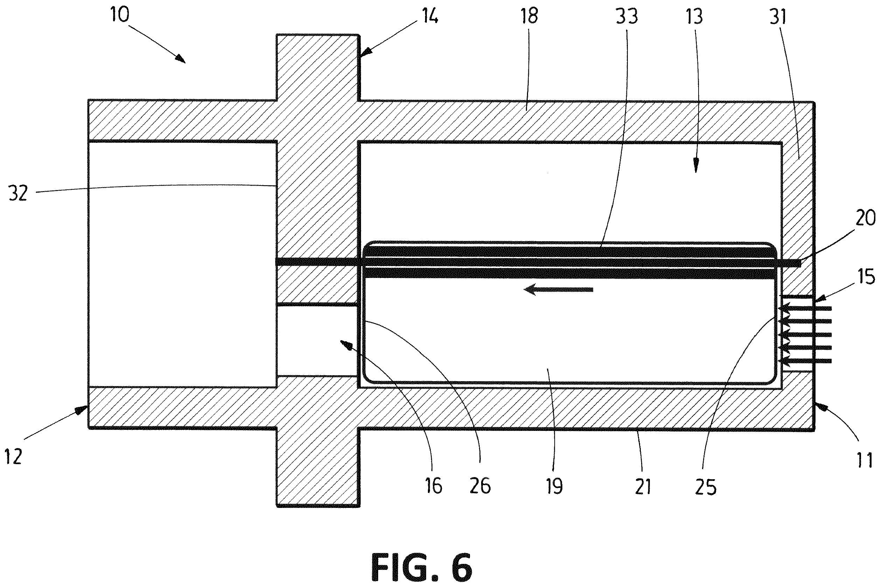

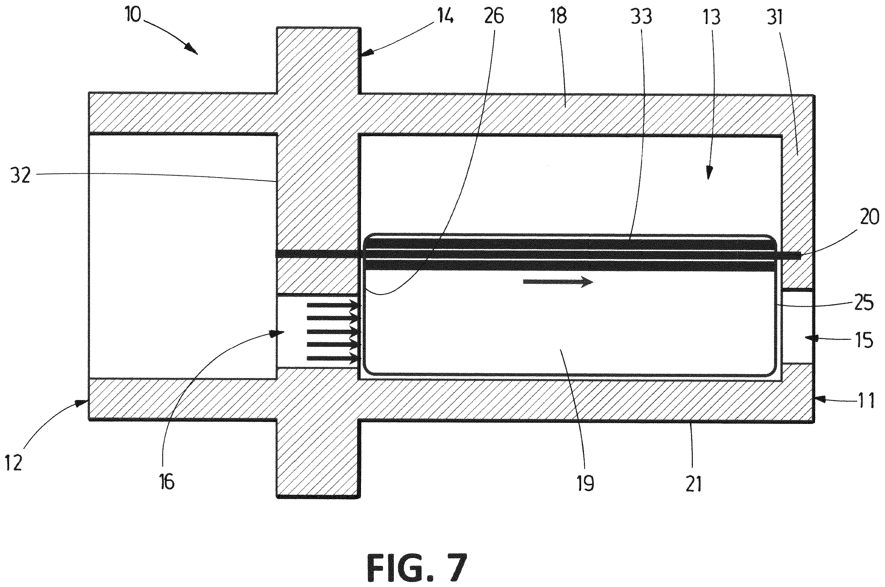

In figures 1 and 3 the overfill valve is in a closed position with the gearbox not in function (the associated engine is switched off). In figures 2 and 4 the overfill valve is in an open position with the gearbox not in function. In figures 6 and 7 the overfill valve is in a closed position with the gearbox in function.

The overfill valve 10 comprises a housing 18 with a first end forming an intake 11 and a second end forming a drain 12.

The drain is adapted to be connected to a discharge connection. For example when the sump is an APU oil sump, the drain 12, may be hydraulically connected to an APU drainage.

The housing 18 is generally axisymmetric, mostly cylindrical.

The intake 11 and the outer wall of the housing 18 on the intake side have a threaded external surface 21. The overfill valve 10 may thus be screwed into a correspondingly threaded sump port so as to mount the overfill valve in the sump port 22.

The housing forms a cylindrical chamber 13 within its interior. The chamber is closed at a first end by a first wall, said inner wall 31, and at a second end by a second wall, said outer wall 32.

The inner wall 31 is crossed through by an intake opening 15, such that the intake opening creates a fluid connection between the intake 11 and the chamber 13. The outer wall 32 is crossed through by a drain opening 16, such that the drain opening creates a fluid connection between the chamber 13 and the drain 12. The only two openings of the chamber 13 are the intake opening 15 at a first end of the chamber and the drain opening 16 at a second opposite end of the chamber.

The housing 18 comprises a shoulder 14. The shoulder limits the mounting of the overfill valve into the sump port. The position of the shoulder 14 along the threaded external surface 21 may be so as to ensure that the overfill valve is correctly mounted, in particular with the right angle, in the sump port. In the present embodiment, the shoulder may lean on the external surface of a sump when the intake opening 15 and drain opening 16 are placed towards a bottom of the oil sump.

The side wall of the chamber 13 comprises a pivot 33, on which is mounted a floating valve 19. The pivot 33 extends along a hinging axis 20 parallel to the longitudinal direction of the overfill valve. The hinging axis 20 is parallel to a flow direction of a fluid between the intake opening 15 and the drain opening 16. The floating valve 19 may thus hinge orthogonally to the flow direction, in particular orthogonally to a fluid flow direction between the intake opening 15 and the drain opening 16.

Moreover, the floating valve 19 is mounted on the pivot 33 so as to be able to slide along the hinging axis 20. The floating valve 19 may slide towards the inner wall 31, or towards the outer wall 32. When a first face, said inner face 25, of the floating valve 19 is against the inner wall 31, the floating valve 19 may seal the intake opening 15. When a second face, said outer face 26, of the floating valve 19 is against the outer wall 32, the floating valve 19 may seal the drain opening 16. In this embodiment, the length of the floating valve 19 is slightly smaller than the length of the chamber 13. As a consequence, there is always a small gap between the outer face 26 of the floating valve 19 and the outer wall 32, and/or between the inner face 25 of the floating valve 19 and the inner wall 31. This facilitates the hinging of the floating valve 19 on its pivot 20, without friction on the inner wall 31 or the outer wall 32.

As will be afterwards described in relation to figures 6 and 7, this may happen as long as the floating valve 19 is in a first position, as also represented on figures 1 and 3, in which the floating valve 19 is in a low position in the chamber 13. The floating valve 19 is in a low position in the chamber when the oil level in the chamber is below a predetermined threshold. In the figures 1 and 3, oil is not represented as it may be absent from the chamber or below a threshold level. When an overfill valve 10 according to the invention is mounted on an oil sump, such situation is considered a normal condition in which no excess of oil is present in the gearbox or engine.

The intake opening 15 and the drain opening 16 are arranged in a bottom portion respectively of the inner wall 31 and of the outer wall 32, such that when there is no oil or a low level of oil in the chamber 13, the floating valve 19 is in a bottom portion of the chamber and thus closes the intake opening 15 and/or the drain opening 16. When there is a high level of oil in the chamber r13, the floating valve 19 is in an upward position in which it opens the intake opening 15 and the drain opening 16. As can be seen on figures 1-4, the intake opening 15 and the drain opening 16 are at a non-null distance from the bottom of the chamber. This non-null distance allows to avoid any oil leak when the shape of a bottom surface of the floating valve does not fit exactly the shape of a bottom surface of the chamber.

If an excess of oil is added to the engine or gearbox, the oil sump full level will be exceeded and excess oil 27 will accordingly flow into the intake 11 of an overfill valve 10 according to the invention. This situation is represented in Figures 2 and 4. The excess oil flows into the chamber 13 through the intake opening 15. As a result the floating valve 19, which average density is lower than the density of the oil, is submitted to a floating force, resulting in a torque and a rotation of the floating valve 19 around its hinging axis 20. By floating up to a second position, the floating valve 19 opens intake opening 15 and the drain opening 16, and thus lets the oil flow through the chamber 13, from the intake opening 15 to the drain opening 16. The excess oil 27 may thus be gradually drained out of the oil sump while the floating valve 19 accompanies the diminishing level of oil by a movement towards the bottom of the chamber 13, until an acceptable level is reached at which the floating valve 19 is back to its first position and completely closes the intake opening 15 and the drain opening 16.

In an aircraft, oil filling happens on ground, during maintenance operations. Therefore the gearbox associated is switched off. The gas pressure in the gearbox is thus the same as the external atmospheric pressure, such that there is no pressure difference between the intake opening 15 and the drain opening 16. The floating valve 19 is therefore free of hinging on its pivot 20, without any friction on the inner wall 31 or the outer wall 32.

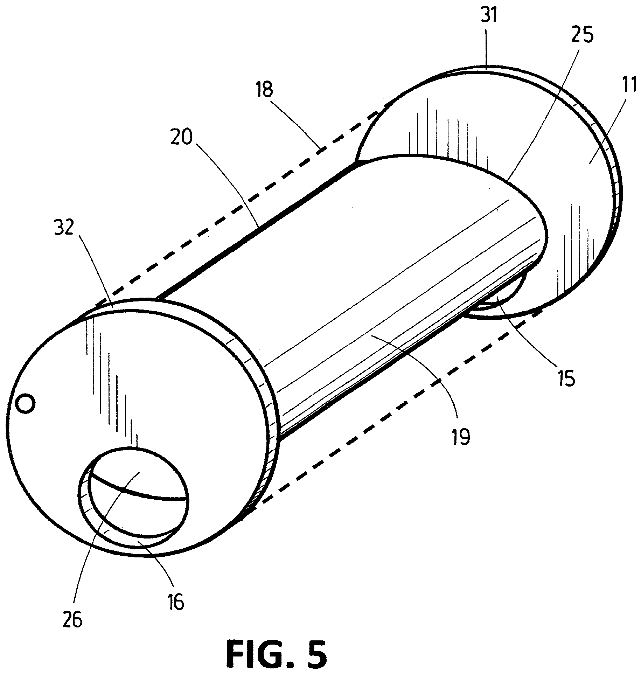

In figure 5, an overfill valve 10 according to the invention and to the embodiment represented in the figures 1-7 is represented in perspective. Only part of the housing 18 is represented so as to see the inside of the chamber. In this figure, the floating valve 19 is in a middle position between a first position in which it closes the intake opening 15 and the drain opening 16 and a full open position.

Figures 6 and 7 represent a situation in which the floating valve 19 is in a first position corresponding to a close position. This may be because there is no oil excess and/or because the gearbox is in function.

In figure 6, the pressure in the gearbox is higher than the pressure outside the gearbox. Therefore, the pressure at the intake opening 15 (represented by arrows at the intake opening 15) is higher than the pressure at the drain opening 16. As a consequence, a force is applied on the floating valve 19, in particular on the inner face 25 of the floating valve 19, such that the floating valve 19 slides towards the outer wall 32 (sliding represented by an arrow on floating valve 19). The pressure difference maintains the outer face 26 of the floating valve 19 against the outer wall and as the floating valve 19 is in a low position in the chamber 13, the floating valve 19 closes the drain opening 16.

Symmetrically in figure 7, the pressure in the gearbox is lower than the pressure outside the gearbox. Therefore, the pressure at the intake opening 15 is lower than the pressure at the drain opening 16 (represented by arrows at the drain opening 16). As a consequence, a force is applied on the floating valve 19, in particular on the outer face 26 of the floating valve 19, such that the floating valve 19 slides towards the inner wall 31 (sliding represented by an arrow on floating valve 19). The pressure difference maintains the inner face 25 of the floating valve 19 against the inner wall 31 and as the floating valve 19 is in a low position in the chamber 13, the floating valve 19 closes the intake opening 15.

When a pressure difference occurs between the intake opening and the drain opening, a valve according to the invention ensures that the sump port, and in this embodiment the gearbox, remains airtight and keeps its pressure. An overfill valve according to the invention therefore allows to drain an oil excess while maintaining the gearbox airtight in function.

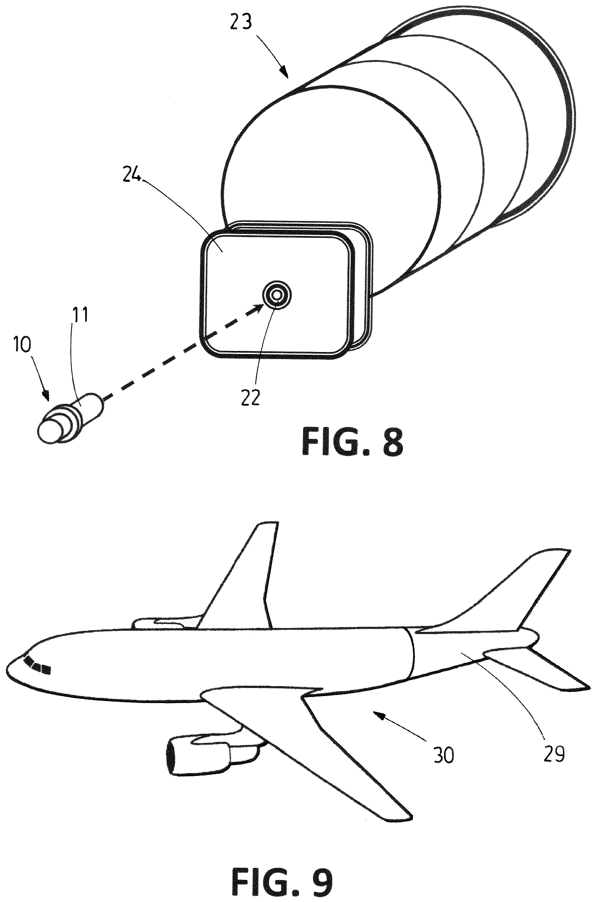

Figure 8 represents a gearbox assembly 23 according to the invention. The gearbox is associated with an engine (not represented), for example an APU. The gearbox 23 and the engine comprise an oil tank 24. The oil tank comprises an overfill port or sump port 22. An overfill valve 10 according to the invention is represented which is adapted to be mounted in the sump port 22. The intake of the overfill valve may be inserted in the sump port 22, while the drain may stick out of the oil tank so as to be connected to an engine oil drainage.

In figure 9 an aircraft 30 is represented which comprises an APU engine according to the invention and its associated gearbox, installed in a rear fuselage section 29 of the aircraft.

## Claims

1. An overfill valve (10) comprising:
- an intake (11) adapted to receive a predetermined liquid (27),
- a drain (12) adapted to drain said liquid (27),
- a chamber (13) comprising:
• an intake opening (15) in fluid communication with the intake (11),
• a drain opening (16) in fluid communication with the drain (12),
- a floating valve (19):
• arranged in the chamber (13),
• adapted to float on said liquid (27),
• hinged to the housing along a hinging axis (20), so as to:
∘ in a first position, close at least one of the intake opening (15) and the drain opening (16),
∘ in a second position, allow said liquid (27) to flow in the chamber (13) from the intake opening (15) to the drain opening (16).
**characterized in that** the floating valve (19) has an elliptical cross-section.

2. Valve according to claim 1, further **characterized in that**:
- when the chamber (13) comprises liquid (27) below a predetermined level, the floating valve (19) is in a position adapted to close at least one of the intake opening (15) and the drain opening (16),
- when the chamber (13) comprises liquid (27) above a predetermined level, the floating valve (19) is in a position adapted to allow a liquid (27) to flow in the chamber (13) from the intake opening (15) to the drain opening (16).

3. Valve according to any of claim 1 or 2, further **characterized in that** it comprises a housing (18) comprising:
- the intake (11),
- the drain (12),
- the chamber (13) formed within the housing (18),
- an external shoulder (14).

4. Valve according to claim 3, further **characterized in that** at least part of an external surface (21) of the housing (18) is threaded.

5. Valve according to any of claim 1 to 4, further **characterized in that** the drain (12) is adapted to be connected to a drain collector.

6. Valve according to any of claim 1 to 5, further **characterized in that** the floating valve (19) is adapted to slide along its hinging axis (20).

7. Valve according to any of claim 1 to 6, further **characterized in that**:
- the floating valve (19) being in the first position, and
- a gas pressure at the intake opening (15) being higher by a predetermined value than a gas pressure at the drain opening (16),
- the floating valve (19) is adapted to slide along its hinging axis (20) towards the drain opening (16).

8. Valve according to any of claim 1 to 7, further **characterized in that** the hinging axis (20) is situated on a lateral side of the chamber (18), parallel to a flow direction between the intake opening (15) and the drain opening (16).

9. Valve according to one of claim 1 to 8, further **characterized in that** said liquid (27) is an oil.

10. Valve according to one of claim 1 to 9, further **characterized in that** it is adapted to be mounted on an oil sump (24).

11. Gearbox (23) comprising at least one overfill valve (10) according to any of claim 1 to 10.

12. Aircraft (30) comprising a gearbox (23) according to claim 11.

## Patentansprüche

1. Überfüllventil (10), Folgendes umfassend:
- einen Einlass (11), der dazu eingerichtet ist, eine festgelegte Flüssigkeit (27) aufzunehmen,
- einen Auslass (12), der dazu eingerichtet ist, die Flüssigkeit (27) abzulassen,
- eine Kammer (13), Folgendes umfassend:
• eine Einlassöffnung (15), die mit dem Einlass (11) in Fluidverbindung steht,
• eine Auslassöffnung (16), die mit dem Auslass (12) in Fluidverbindung steht,
- ein Schwimmerventil (19):
• das in der Kammer (13) angeordnet ist,
• das dazu eingerichtet ist, auf der Flüssigkeit (27) zu schwimmen,
• das entlang einer Scharnierachse (20) am Gehäuse gelenkig befestigt ist, um:
o in einer ersten Stellung die Einlassöffnung (15) und/oder die Auslassöffnung (16) zu schließen,
o in einer zweiten Stellung zuzulassen, dass die Flüssigkeit (27) in der Kammer (13) von der Einlassöffnung (15) zur Auslassöffnung (16) strömt,
**dadurch gekennzeichnet, dass** das Schwimmerventil (19) einen elliptischen Querschnitt aufweist.

2. Ventil nach Anspruch 1, ferner **dadurch gekennzeichnet, dass**:
- wenn die Kammer (13) Flüssigkeit (27) unter einem festgelegten Füllstand umfasst, das Schwimmerventil (19) in einer Stellung ist, die dazu eingerichtet ist, die Einlassöffnung (15) und/oder die Auslassöffnung (16) zu schließen,
- wenn die Kammer (13) Flüssigkeit (27) über einem festgelegten Füllstand umfasst, das Schwimmerventil (19) in einer Stellung ist, die dazu eingerichtet ist, zuzulassen, dass eine Flüssigkeit (27) in der Kammer (13) von der Einlassöffnung (15) zur Auslassöffnung (16) strömt.

3. Ventil nach einem der Ansprüche 1 oder 2, ferner **dadurch gekennzeichnet, dass** es ein Gehäuse (18) umfasst, Folgendes umfassend:
- den Einlass (11),
- den Auslass (12),
- die im Gehäuse (18) ausgebildete Kammer (13),
- eine äußere Schulter (14).

4. Ventil nach Anspruch 3, ferner **dadurch gekennzeichnet, dass** zumindest ein Teil einer Außenfläche (21) des Gehäuses (18) mit einem Gewinde versehen ist.

5. Ventil nach einem der Ansprüche 1 bis 4, ferner **dadurch gekennzeichnet, dass** der Auslass (12) dazu eingerichtet ist, mit einem Auslasssammelbehälter verbunden zu sein.

6. Ventil nach einem der Ansprüche 1 bis 5, ferner **dadurch gekennzeichnet, dass** das Schwimmerventil (19) dazu eingerichtet ist, sich entlang seiner Scharnierachse (20) zu verschieben.

7. Ventil nach einem der Ansprüche 1 bis 6, ferner **dadurch gekennzeichnet, dass**:
- sich das Schwimmerventil (19) in der ersten Stellung befindet und
- ein Gasdruck an der Einlassöffnung (15) um einen festgelegten Wert höher als ein Gasdruck an der Auslassöffnung (16) ist,
- das Schwimmerventil (19) dazu eingerichtet ist, sich entlang seiner Scharnierachse (20) zur Abflussöffnung (16) zu verschieben.

8. Ventil nach einem der Ansprüche 1 bis 7, ferner **dadurch gekennzeichnet, dass** sich die Scharnierachse (20) an einer lateralen Seite der Kammer (18) parallel zu einer Strömungsrichtung zwischen der Einlassöffnung (15) und der Auslassöffnung (16) befindet.

9. Ventil nach einem der Ansprüche 1 bis 8, ferner **dadurch gekennzeichnet, dass** die Flüssigkeit (27) ein Öl ist.

10. Ventil nach einem der Ansprüche 1 bis 9, ferner **dadurch gekennzeichnet, dass** es dazu eingerichtet ist, an einem Ölsumpf (24) montiert zu werden.

11. Getriebe (23), mindestens ein Überlaufventil (10) nach einem der Ansprüche 1 bis 10 umfassend.

12. Flugzeug (30), ein Getriebe (23) nach Anspruch 11 umfassend.

## Revendications

1. Vanne de trop-plein (10) comprenant :
- une entrée (11) apte à recevoir un liquide prédéterminé (27),
- une sortie (12) apte à évacuer ledit liquide (27),
- une chambre (13) comprenant :
- une ouverture d'admission (15) en communication fluidique avec l'entrée (11),
- une ouverture d'évacuation (16) en communication fluidique avec la sortie (12),
- une vanne flottante (19) :
- disposée dans la chambre (13),
- apte à flotter sur ledit liquide (27),
- articulée sur le logement le long d'un axe d'articulation (20), de façon à :
- dans une première position, fermer au moins une de l'ouverture d'admission (15) et l'ouverture d'évacuation (16),
- dans une seconde position, permettre audit liquide (27) de s'écouler dans la chambre (13) de l'ouverture d'admission (15) à l'ouverture d'évacuation (16),
**caractérisée en ce que** la vanne flottante (19) présente une section transversale elliptique.

2. Vanne selon la revendication 1, **caractérisée en outre en ce que** :
- lorsque la chambre (13) contient du liquide (27) en dessous d'un niveau prédéterminé, la vanne flottante (19) est dans une position apte à fermer au moins une de l'ouverture d'admission (15) et l'ouverture d'évacuation (16),
- lorsque la chambre (13) contient du liquide (27) au-dessus d'un niveau prédéterminé, la vanne flottante (19) est dans une position apte à permettre à un liquide (27) de s'écouler dans la chambre (13) de l'ouverture d'admission (15) à l'ouverture d'évacuation (16).

3. Vanne selon l'une quelconque des revendications 1 et 2, **caractérisée en outre en ce qu'**elle comprend un logement (18) comprenant :
- l'entrée (11),
- la sortie (12),
- la chambre (13) formée à l'intérieur du logement (18),
- un épaulement extérieur (14).

4. Vanne selon la revendication 3, **caractérisée en outre en ce qu'**au moins une partie d'une surface extérieure (21) du logement (18) est filetée.

5. Vanne selon l'une quelconque des revendications 1 à 4, **caractérisée en outre en ce que** la sortie (12) est apte à être raccordée à un collecteur d'évacuation.

6. Vanne selon l'une quelconque des revendications 1 à 5, **caractérisée en outre en ce que** la vanne flottante (19) est apte à glisser le long de son axe d'articulation (20) .

7. Vanne selon l'une quelconque des revendications 1 à 6, **caractérisée en outre en ce que** :
- lorsque la vanne flottante (19) est dans la première position, et
- lorsqu'une pression de gaz au niveau de l'ouverture d'admission (15) est supérieure d'une valeur prédéterminée à une pression de gaz au niveau de l'ouverture d'évacuation (16),
- la vanne flottante (19) est apte à glisser le long de son axe d'articulation (20) en direction de l'ouverture d'évacuation (16).

8. Vanne selon l'une quelconque des revendications 1 à 7, **caractérisée en outre en ce que** l'axe d'articulation (20) est situé sur un côté latéral de la chambre (18), parallèlement à une direction d'écoulement entre l'ouverture d'admission (15) et l'ouverture d'évacuation (16) .

9. Vanne selon une des revendications 1 à 8, **caractérisée en outre en ce que** ledit liquide (27) est une huile.

10. Vanne selon une des revendications 1 à 9, **caractérisée en outre en ce qu'**elle est apte à être installée sur un carter d'huile (24).

11. Boîte d'engrenage (23) comprenant au moins une vanne de trop-plein (10) selon l'une quelconque des revendications 1 à 10.

12. Aéronef (30) comprenant une boîte d'engrenage (23) selon la revendication 11.
